# EUROPÄISCHE PATENTSCHRIFT

(11) **EP 3 745 562 B1**
(45) Veröffentlichungstag und Bekanntmachung des Hinweises auf die Patenterteilung: **02.11.2022**
(21) Anmeldenummer: 20169902.2
(22) Anmeldetag: 16.04.2020
(51) Int. Cl.: H02K 3/32, H02K 3/52, H02K 11/33

(54) **SPULENKÖRPER MIT INTEGRIERTER KONTAKTIERVORRICHTUNG**
COIL FORMER WITH INTEGRATED CONTACTING DEVICE
CORPS DE BOBINE POURVU DE DISPOSITIF DE CONTACT INTÉGRÉ

(30) Priorität: 27.05.2019 DE 102019114057
(43) Veröffentlichungstag der Anmeldung: 02.12.2020
(73) Patentinhaber: ebm-papst Landshut GmbH, 84030 Landshut (DE)
(72) Erfinder: DEININGER, Martin, 84144 Geisenhausen (DE); HERTREITER, Martin, 84180 Loiching (DE); SCHLOPAKOWSKI, Frank, 84034 Landshut (DE); WEINGART, Markus, 84056 Rottenburg (DE); KREUZER, Daniel, 84032 Altdorf (DE)
(74) Vertreter: Staeger & Sperling Partnerschaftsgesellschaft mbB

(56) Entgegenhaltungen:
- JP-A- 2009 303 438
- JP-A- 2013 212 020
- US-A1- 2017 353 063
- US-A1- 2018 316 242

## Beschreibung

Die Erfindung betrifft einen Spulenkörper mit einer integrierten Kontaktiervorrichtung, vorzugsweise zur Ausbildung einer Wickeldrahtkontaktierung an eine Leiterplatte.

Aus dem Stand der Technik sind diverse Spulenkörper und Wickelkörper zur Aufnahme einer Wicklung eines elektrischen Leiters zur Bildung einer Spule für eine elektrische Maschine bekannt. Das jeweilige Ende des Wickeldrahtes wird dabei auf unterschiedlichste Weise mit einem Kontakt auf einer Leiterplatte elektrisch kontaktiert und verbunden.

Auf die im Stand der Technik umfangreich beschriebenen Verfahren, wie Schneidklemmverbindungen mit Kontaktfedern zur Kontaktierung einer Lötfahne, Schneidklemmverbinder mit einem Einlötstift oder einer Einpresszone, Verschweißen des Drahtes mit einem Leiterplattenkontakt oder alternativ auch Direktverbindungen wie dem Löten oder Verschweißen des Wickeldrahtendes auf der Leiterplatte bzw. der Motorelektronik. Teilweise werden auch Direktstecksysteme oder Steckverbinder verwendet, was zusätzliche Bauteile und eine aufwändige Montage erfordert.

Grundsätzlich besteht allerdings das Problem bereits darin, dass das Drahtende einer Wicklung in der Zeitspanne nach dem Wickelvorgang bis zur Kontaktierung mit einer Elektronik nicht nur fixiert werden muss, sondern auch auf einfache und zuverlässige Weise mit der Elektronik oder Leiterplatte im montierten Zustand des Spulenkörpers bewerkstelligt werden muss.

In der DE 10 2006 021903 A1wird ein Wickelkörper zur Aufnahme einer Wicklung eines elektrischen Leiters zur Bildung einer Spule für eine elektrische Maschine beschrieben mit einem Wickelbereich, der durch einen Wickelträger und zwei den Wickelbereich begrenzende und mit dem Wickelträger verbundene Schenkel gebildet ist. Es werden verschiedene Maßnahmen vorgeschlagen, um an dem Wickelkörper eine kompakte Wicklung aufzubringen, um den Wickelkörper spielfrei und betriebssicher an einem Zahn einer elektrischen Maschine anzuordnen. Dabei wird zumindest in einem der Schenkel eine zum Wickelbereich offene Nut zur Aufnahme eines Wicklungsendes der Spule ausgebildet, wobei die Nut zum freien Ende des Schenkels eine zunehmende Nuttiefe aufweist.

Nachteilig ist dabei, dass sich einerseits der Wickeldraht aus der Nut lösen kann und zum Verbinden eines Drahtendes der Wickeldraht entweder aus der Nut gelöst werden muss oder ein ungeschütztes freies Drahtende von dem Spulenkörper weg steht, was ebenfalls nicht erwünscht ist.

Wickelkörper zur Aufnahme einer Wicklung eines elektrischen Wickeldrahtes zur Bildung einer Spule für eine elektrische Maschine sind ferner zumindest aus den Veröffentlichungen US 2018/316242 A1, JP 2013 212020 A, US 2017/353063 A1 und JP 2009 303438 A bekannt.

Der Erfindung liegt deshalb die Aufgabe zugrunde, vorbesagte Nachteile zu überwinden und eine einfachere und kostengünstig realisierbare Lösung bereit zu stellen, die zuverlässig den Wickeldraht hält und führt und eine positionssichere Lage des Wickeldrahtes zum Verbindern mit einer Leiterplatte oder Elektronik gewährleistet.

Diese Aufgabe wird durch die Merkmalskombination gemäß Patentanspruch 1 gelöst.

Erfindungsgemäß wird hierzu ein Wickelkörper zur Aufnahme einer Wicklung eines elektrischen Wickeldrahtes zur Bildung einer Spule für eine elektrische Maschine gemäß Anspruch 1 vorgeschlagen. Der Wickelkörper besitzt einen Wickelbereich auf einem Wickelträger und wenigstens einen an den Wickelbereich angrenzende und mit dem Wickelträger verbundene Wickeldrahthaltevorrichtungen.

Jeder der Wickeldrahthaltevorrichtungen besitzt bestimmungsgemäß eine erste Drahtfixierung und eine zweite in einer Wickeldrahtverlaufsrichtung in diesem Bereich dazu beabstandete Drahtfixierung, um einen ersten Wickeldrahtabschnitt an der ersten Drahtfixierung zu Fixieren und den Wickeldraht von dort zur zweiten Drahtfixierung zu führen und an dieser mit einem zweiten Wickeldrahtabschnitt zu fixieren.

Erfindungsgemäß besitzt jede Wickeldrahthaltevorrichtung im Bereich zwischen der jeweils ersten Drahtfixierung und der jeweils zweiten Drahtfixierung der besagten Wickeldrahthaltevorrichtung eine fensterartige Öffnung, über die der Wickeldraht mit dem Drahtabschnitt zwischen dem jeweils ersten und zweiten Wickeldrahtabschnitt hinweg führbar ist bzw. verläuft. Auf diese Weise ist der besagte Drahtabschnitt zwischen den beiden Fixierungen am Wickelkörper fixiert und zugänglich zur Verbindung mit einer Leiterplatte.

Erfindungsgemäß ist die erste Drahtfixierung (z. B. ein Fixierpin) gleichzeitig als Befestigungsmittel zur Positionierung und/oder Befestigung des Wickelkörpers an korrespondierenden Ausnehmungen einer Leiterplatte ausgebildet. Auf diese Weise wird sichergestellt, dass nach der Montage des Wickelkörpers auf einer Leiterplatte der Wickeldraht in dem Bereich zwischen der ersten und zweiten Drahtfixierung unmittelbar oberhalb einer Lötkontaktstelle oder Lötpads der Leiterplatte verläuft und auf einfache Weise mit der Kontaktstelle der Leiterplatte verbunden werden kann.

In einer besonders vorteilhaften Ausgestaltung sind daher die Wickeldrahthaltevorrichtungen an einer Montagestirnseite, die ausgebildet ist zur Montage an einer Leiterplatte vorgesehen.

Erfindungsgemäß definiert eine geradlinige Verbindung zwischen der ersten Drahtfixierung und der zweiten Drahtfixierung jeder Wickeldrahthaltevorrichtung die jeweilige Wickeldrahtverlaufsrichtung des Wickeldrahts in diesem Bereich.

Weiter vorteilhaft ist es, wenn die erste Drahtfixierung als ein vom Wickelkörper wegstehender Wickelstift ausgebildet ist, an dem der Wickeldrahtabschnitt durch Ausbildung wenigstens eines um den Wickelstift herumlaufenden Drahtwickels fixiert werden kann. Dieser Wickelstift bildet mit Vorteil gleichzeitig einen Montagepin zur Einsteckmontage in entsprechende Öffnungen einer Leiterplatte.

Mit Vorteil kann sich daher in die gleiche axiale Erstreckungsrichtung des Wickelstifts ein Distanzelement erstrecken, welches dadurch den Abstand des Wickeldrahtes im Bereich zwischen den jeweiligen ersten und zweiten Drahtfixierungen zur Leiterplatte bestimmt.

In einer ebenfalls vorteilhaften Ausgestaltung der Erfindung ist vorgesehen, dass die zweite Drahtfixierung ebenfalls ein Wickelstift ist, an dem der zweite Wickeldrahtabschnitt durch Ausbildung wenigstens eines um den Wickelstift herumlaufenden Drahtwickels fixiert werden kann. Mit Vorteil können auch mehrere Wickel um den jeweiligen Wickelstift hergestellt werden.

In einer alternativen Ausgestaltung der Erfindung ist vorgesehen, dass die zweite Drahtfixierung als eine V-förmige einseitig offene Drahtklemmstelle ausgebildet ist, an dem der zweite Wickeldrahtabschnitt durch Einklemmen des Wickeldrahtes fixiert werden kann.

Um die Zugänglichkeit zum Verbinden des Wickeldrahtes zwischen den beiden Fixerstellen und der Leiterplatte zu optimieren, ist in vorteilhafter Weise vorgesehen, dass jede Wickeldrahthaltevorrichtung einen sich von einem Flanschbereich des Wickelträger abstehenden L-förmigen oder U-förmigen Bügel ausbildet an dem die beschriebene, jeweils zweite Drahtfixierung ausgebildet ist. Weiter vorteilhaft ist es dabei, wenn der jeweilige Bügel wenigstens je einen parallel und quer zur Wickeldrahtverlaufsrichtung des Wickeldrahts (in diesem Bereich) verlaufenden Steg ausbildet und die zweite Drahtfixierung an dem jeweils quer verlaufenden Steg ausgebildet ist. Durch einen insbesondere U-förmig ausgebildeten Haltebügel spannen dann die zwei über den quer verlaufender Haltesteg miteinander verbundene parallel (zur Wickeldrahtverlaufsrichtung des Wickeldrahts in diesem Bereich) verlaufende Haltestege eine fensterartige Aussparung auf, über die der Wickeldraht geführt ist. Durch eine solche U-förmige fensterartige Aussparung wird eine besonders gute Zugänglichkeit des Wickeldrahtes bei gleichzeitig hoher Stabilität erzielt.

In einer weiteren vorteilhaften Ausgestaltung ist vorgesehen, dass der zweite Wickelstift eine zum ersten Wickelstift abweichende axialen Erstreckungsrichtung aufweist, vorzugsweise eine um etwa 90° gegenüber der axialen Erstreckungsrichtung des ersten Wickelstiftes verschiedene axiale Erstreckungsrichtung.

Eine vorteilhafte Ausgestaltung der Erfindung ist auch ein Wickelkörper, wobei der Wickelträger des Wickelkörpers mit dem Wickeldraht bewickelt ist und dieser zumindest mit einem ersten Wickeldrahtabschnitt an der ersten Drahtfixierung und mit dem zweiten Wickeldrahtabschnitt an der zweiten Drahtfixierung der Wickeldrahthaltevorrichtung befestigt ist und weiter vorzugsweise beide Wickeldrahtenden des Wickeldrahtes jeweils an einer solchen Wickeldrahthaltevorrichtung befestigt sind.

Ein weiterer vorteilhafter Aspekt der vorliegenden Erfindung betrifft eine Einheit bestehend aus einer Leiterplatte und einen an der Leiterplatte montierten Wickelkörper, bei dem jeweils Wickeldrahtabschnitte zwischen je zwei Drahtfixierungen einer Wickeldrahthaltevorrichtung unmittelbar oberhalb einer Kontaktierungsstelle der Leiterplatte verlaufen und besonders bevorzugt mit dieser elektrisch kontaktierend verbunden sind.

Weiter vorteilhaft ist es, wenn eine oder die jeweilige Drahtfixierung mit einer beabstandeten Doppeldrahtverlegung oder Mittel zur Doppeldrahtverlegung ausgebildet ist, die derart ausgeführt ist, dass eine zusätzliche Drahtschleife gebildet wird, die einen im Reparaturfall notwendigen zweiten Verbindungsvorgang, Lötvorgang oder Schweißvorgang ermöglicht.

Ein weiterer Aspekt der vorliegenden Erfindung betrifft das Verfahren zum

Befestigen eines Wickeldrahtendes oder Wickeldrahtabschnittes eines Wickeldrahtes an einem Wickelkörper nach den Merkmalen gemäß Patentanspruch 10 mit den folgenden

Schritten:
a. Fixieren des Wickeldrahtabschnittes an der ersten Drahtfixierung indem wenigstens ein Drahtwickel um die Drahtfixierung herum gebildet wird und
b. Aufwendung einer axialen Zugkraft auf den Wickeldraht in die Wickeldrahtverlaufsrichtung zur zweiten Drahtfixierung und
c. Fixieren des zweiten Wickeldrahtabschnittes an der zweiten Drahtfixierung, derart, dass der Wickeldraht zwischen der ersten und zweiten Drahtfixierung gespannt oder zumindest geradlinig verläuft oder in einer für die Drahtfixierung geeigneten Weise.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigt:
- Fig. 1: eine schematische Konzeptzeichnung der Realisierung eines ersten Ausführungsbeispiels eines erfindungsgemäßen Wickel-körpers,
- Fig. 2: eine Ansicht ähnlich der Figur in einer auf einer Leiterplatte montierten Position,
- Fig. 3: eine Seitenansicht auf eine Anordnung gemäß der Figur 2 und
- Fig. 4: eine alternative Ausführungsform einer Wickeldrahthaltevorrichtung eines Wickelkörpers.

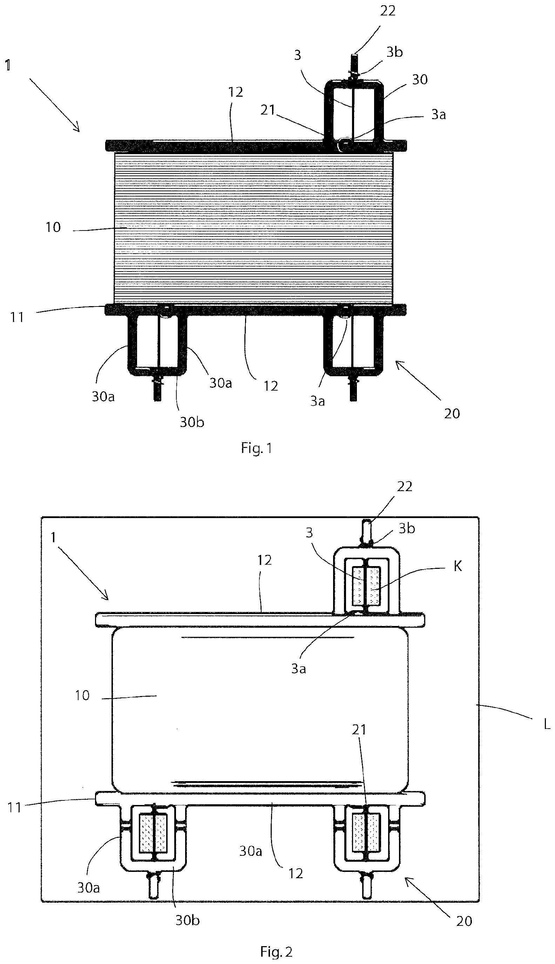

Im Folgenden wird die Erfindung anhand von Ausführungsbeispielen gemäß den Figuren 1 bis 4 näher beschrieben, wobei gleiche Bezugszeichen auf gleiche strukturelle und/oder funktionale Merkmale hinweisen.

In den Figuren 1 bis 3 ist hierzu ein erstes Ausführungsbeispiel eines erfindungsgemäßen Wickelkörpers 1 zur Aufnahme einer Wicklung eines elektrischen Wickeldrahtes 3 zur Bildung einer Spule für eine elektrische Maschine gezeigt.

Der Wickelkörpers 1 besitzt einen Wickelbereich 10 auf einem Wickelträger 11 und drei sich an den Wickelbereich 10 angrenzende und mit dem Wickelträger 11 verbundene Wickeldrahthaltevorrichtungen 20. Die Wickeldrahthaltevorrichtungen 20 sind mit dem jeweiligen Flanschbereich 15 integral verbunden.

Jeder der drei exemplarisch gezeigten Wickeldrahthaltevorrichtungen 20 besitzt eine erste Drahtfixierung 21 und eine zweite dazu in einer Wickeldrahtverlaufsrichtung W räumlich beabstandete Drahtfixierung 22. An der ersten Drahtfixierung 21 wird ein jeweils erste Wickeldrahtabschnitt 3a fixiert und von dort wird der Wickeldraht 3 zur zweiten Drahtfixierung 22 geführt und an dieser mit einem zweiten Wickeldrahtabschnitt 3b fixiert.

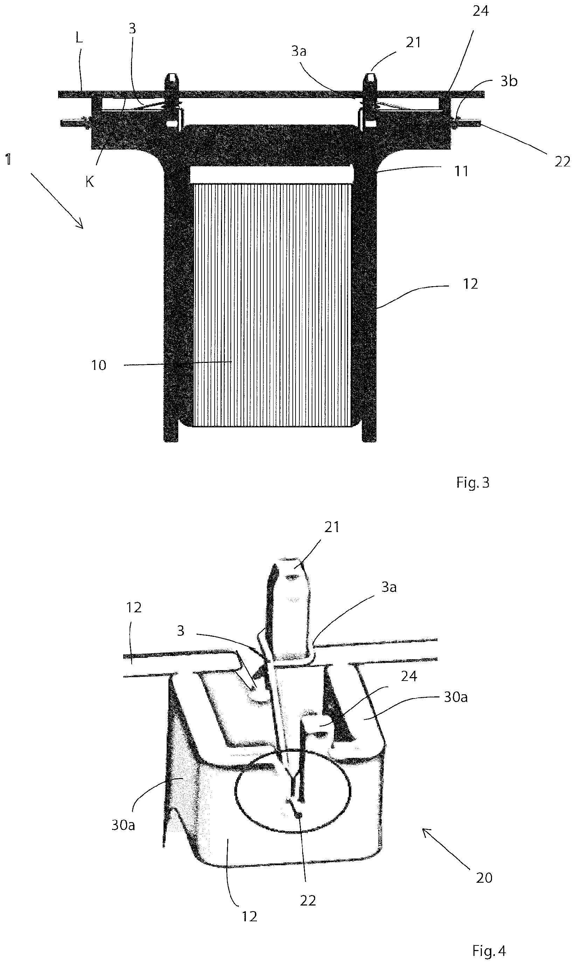

Beide Drahtfixierungen 21, 22 sind als Wickelstifte bzw. Wickelpins ausgebildet, wobei der erste Wickelstift 21, wie in der Figur 3 erkennbar, seitlich nach oben von der Wickeldrahthaltevorrichtung 20 hervorsteht und durch eine Öffnung in der Leiterplatte L geführt ist. Der erste Wickelstift 21 dient in diesem Ausführungsbeispiel demzufolge neben der Drahtfixierung gleichzeitig als Befestigungsmittel zur Positionierung des Wickelkörpers an korrespondierenden Ausnehmungen der Leiterplatte L.

Der jeweils zweite Wickelstift 22 der Wickeldrahthaltevorrichtung 20 ragt seitlich in einer Richtung parallel zur Leiterplattenebene weg. An den Wickeldrahthaltevorrichtungen 20 sind ferner Distanzelemente 24 vorgesehen, um einen definierten Abstand zur Leiterplatte sicherzustellen.

Wie in der Figur 2 ersichtlich, wird durch die Konzeption der Wickeldrahthaltevorrichtung 20 ein geradliniger Wickeldrahtverlauf zwischen der ersten Drahtfixierung 21 und der zweiten Drahtfixierung 22 des Wickeldrahts 3 in diesem Bereich realisiert und zwar jeweils zwischen der fensterartigen Öffnung und der Kontaktstelle K der Leiterplatte L.

In der Figur 4 ist eine alternative Ausführungsform einer Wickeldrahthaltevorrichtung 20 eines Wickelkörpers 1 gezeigt. Die hier gezeigte zweite Drahtfixierung 22 wurde als eine V-förmige einseitig offene Drahtklemmstelle ausgeführt, an dem der zweite Wickeldrahtabschnitt 3b durch Einklemmen des Wickeldrahtes 3 fixiert ist.

Bei beiden Ausführungsformen sind die Wickeldrahthaltevorrichtungen 20 durch einen sich von einem Flanschbereich 12 des Wickelträgers 11 abstehenden U-förmigen Bügel 30 gebildet, wobei an dem einen Steg 30b die jeweils zweite Drahtfixierung 22 ausgebildet ist. Der U-förmige Bügel 30 besteht aus je zwei parallel und einem quer zur Wickeldrahtverlaufsrichtung W des Wickeldrahts 3 verlaufenden Stegen 30a, 30b. Zwischen dem Flanschbreich 12 des Wickelträgers 11 und dem U-förmigen Bügel 30 wird die jeweilige fensterartige Öffnung 33 der jeweiligen Wickeldrahthaltevorrichtung 20 gebildet. Diese befindet sich in der Montageposition des Wickelkörpers 1 auf der Leiterplatte L jeweils oberhalb einer Kontaktstelle K, so dass der Wickeldraht 3 mit der Kontaktstelle verbunden werden kann.

Die Erfindung beschränkt sich in ihrer Ausführung nicht auf die vorstehend angegebenen bevorzugten Ausführungsbeispiele. Vielmehr ist eine Anzahl von Varianten entsprechend der beigefügten Ansprüche möglich.

## Patentansprüche

1. Wickelkörper (1) zur Aufnahme einer Wicklung eines elektrischen Wickeldrahtes (3) zur Bildung einer Spule für eine elektrische Maschine mit einem Wickelbereich (10), der durch einen Wickelträger (11) und wenigstens eine an den Wickelbereich (10) angrenzende und mit dem Wickelträger (11) verbundene Wickeldrahthaltevorrichtung (20) gebildet ist, wobei jede Wickeldrahthaltevorrichtung (20) eine erste Drahtfixierung (21) und eine zweite dazu in einer Wickeldrahtverlaufsrichtung (W) beabstandete Drahtfixierung (22) aufweist, um einen ersten Wickeldrahtabschnitt (3a) an der ersten Drahtfixierung (21) zu fixieren und den Wickeldraht (3) von dort zur zweiten Drahtfixierung (22) zu führen
und an dieser mit einem zweiten Wickeldrahtabschnitt (3b) zu fixieren,
**dadurch gekennzeichnet, dass** die erste Drahtfixierung (21) gleichzeitig ein Befestigungsmittel zur Positionierung und/oder Befestigung des Wickelkörpers (1) an korrespondierenden Ausnehmungen einer Leiterplatte (L) bildet,
wobei eine geradlinige Verbindung zwischen der ersten Drahtfixierung (21) und der zweiten Drahtfixierung (22) die Wickeldrahtverlaufsrichtung (W) des Wickeldrahts (3) in diesem Bereich definiert,
und wobei jede Wickeldrahthaltevorrichtung (20) im Bereich zwischen der jeweils ersten Drahtfixierung (21) und der jeweils zweiten Drahtfixierung (22) eine fensterartige Öffnung oder Ausnehmung aufweist über die der Wickeldraht (3) mit einem Drahtabschnitt zwischen dem jeweils ersten und zweiten Wickeldrahtabschnitt (3a,3b) hinweg verläuft, wodurch der Drahtabschnitt zwischen den ersten und zweiten Drahtfixierungen (21,22) am Wickelkörper (1) fixiert und zur Verbindung mit der Leiterplatte (L) zugänglich ist.

2. Wickelkörper (1) gemäß Anspruch 1, **dadurch gekennzeichnet, dass** die erste Drahtfixierung (21) als ein vom Wickelkörper (1) wegstehender erster Wickelstift (21) ausgebildet ist, an dem der erste Wickeldrahtabschnitt (3a) durch Ausbildung weWickelstift (21) herumlaufenden Drahtwickels fixiert werden kann.

3. Wickelkörper (1) gemäß Anspruch 1 oder 2, **dadurch gekennzeichnet, dass** die zweite Drahtfixierung (22) als ein zweiter Wickelstift ausgebildet ist, an dem der zweite Wickeldrahtabschnitt (3b) durch Ausbildung wenigstens eines um den zweiten Wickelstift (22) herumlaufenden Drahtwickels fixiert werden kann.

4. Wickelkörper (1) gemäß Anspruch 1 oder 2, **dadurch gekennzeichnet, dass** die zweite Drahtfixierung (22) als eine V-förmige einseitig offene Drahtklemmstelle ausgebildet ist, an dem der zweite Wickeldrahtabschnitt (3b) durch Einklemmen des Wickeldrahtes (3) fixiert werden kann.

5. Wickelkörper (1) gemäß einem der vorhergehenden Ansprüche, **dadurch gekennzeichnet, dass** jede Wickeldrahthaltevorrichtung (20) einen sich von einem Flanschbereich (12) des Wickelträger (11) abstehenden L-förmigen oder U-förmigen Bügel (30) ausbildet an dem die jeweils zweite Drahtfixierung (22) ausgebildet ist.

6. Wickelkörper (1) gemäß Anspruch 5, **dadurch gekennzeichnet, dass** der Bügel (30) wenigstens je einen parallel bzw. quer zur Wickeldrahtverlaufsrichtung (W) des Wickeldrahts (3) verlaufenden ersten Steg (30a) bzw. zweiten Steg (30b) ausbildet und die zweite Drahtfixierung (22) an dem quer verlaufenden zweiten Steg (30b) ausgebildet ist.

7. Wickelkörper (1) gemäß einem der vorhergehenden Ansprüche und Anspruch 2, **dadurch gekennzeichnet, dass** der zweite Wickelstift (22) eine zum ersten Wickelstift (21) abweichende axiale Erstreckungsrichtung aufweist, vorzugsweise eine um etwa 90° gegenüber der axialen Erstreckungsrichtung des ersten Wickelstiftes (21) verschiedene axiale Erstreckungsrichtung.

8. Wickelkörper (1) gemäß einem der vorhergehenden Ansprüche, **dadurch gekennzeichnet, dass** der Wickelträger (11) des Wickelkörpers (1) mit dem Wickeldraht (3) bewickelt ist und dieser zumindest mit dem ersten Wickeldrahtabschnitt (3a) an der ersten Drahtfixierung (21) und mit dem zweiten Wickeldrahtabschnitt (3b) an der zweiten Drahtfixierung (22) der Wickeldrahthaltevorrichtung (20) befestigt ist.

9. Wickelkörper (1) gemäß einem der vorhergehenden Ansprüche, **dadurch gekennzeichnet, dass** die Drahtfixierung mit einer beabstandeten Doppeldrahtverlegung oder Mittel zur Doppeldrahtverlegung ausgebildet ist, die derart ausgeführt ist, dass eine zusätzliche Drahtschleife gebildet wird, die einen im Reparaturfall notwendigen zweiten Verbindungsvorgang, Lötvorgang oder Schweißvorgang ermöglicht.

10. Verfahren zum Befestigen eines Wickeldrahtendes oder Wickeldrahtabschnittes eines Wickeldrahtes (3) an einem Wickelkörper (1) gemäß einem der vorhergehenden Ansprüche mit den folgenden Schritten:
a. Fixieren eines ersten Wickeldrahtabschnittes (3a) an einer ersten Drahtfixierung (21) indem wenigstens ein Drahtwickel um die erste Drahtfixierung (21) herum gebildet wird und
b. Aufwendung einer axialen Zugkraft auf den Wickeldraht (3) in die Wickeldrahtverlaufsrichtung (W) zu einer zweiten Drahtfixierung (22) und
c. Fixieren eines zweiten Wickeldrahtabschnittes (3b) an einer zweiten Drahtfixierung (22), derart, dass der Wickeldraht (3) zwischen der ersten und zweiten Drahtfixierung (21, 22) gespannt oder zumindest geradlinig oder in einer für die Drahtfixierung geeigneten Weise verläuft.

## Claims

1. A winding body (1) for receiving a winding of an electric winding wire (3) for forming a coil for an electric machine, with a winding region (10) which is formed by a winding support (11) and at least one winding wire holding device (20) adjoining the winding region (10) and connected to the winding support (11), wherein each winding wire holding device (20) comprises a first wire fixation (21) and a second wire fixation (22) spaced therefrom in a winding wire direction (W), in order to fix a first winding wire section (3a) on the first wire fixation (21) and lead the winding wire (3) from there to the second wire fixation (22)
and fix it on said second wire fixation with a second wire winding wire section (3b),
**characterized in that** the first wire fixation (21) at the same time forms a fastening means for positioning and/or fastening the winding body (1) on corresponding recesses of a circuit board (L),
wherein a straight connection between the first wire fixation (21) and the second wire fixation (22) defines the winding wire direction (W) of the winding wire (3) in this region,
and wherein each winding wire holding device (20) in the region between the respective first wire fixation (21) and the respective second wire fixation (22) comprises a window-like opening or recess, over which the winding wire (3) runs with a wire section between the respective first and second winding wire sections (3a, 3b), whereby the wire section between the first and second wire fixations (21, 22) is fixed on the winding body (1) and is accessible for the connection to the circuit board (L).

2. The winding body (1) according to claim 1, **characterized in that** the first wire fixation (21) is designed as a first winding pin (21) protruding from the winding body (1), on which winding pin the first winding wire section (3a) can be fixed by forming at least one wire winding running around the first winding pin (21).

3. The winding body (1) according to claim 1 or 2, **characterized in that** the second wire fixation (22) is designed as a second winding pin, on which the second winding wire section (3b) can be fixed by forming at least one wire winding running around the second winding pin (22).

4. The winding body (1) according to claim 1 or 2, **characterized in that** the second wire fixation (22) is designed as a V-shaped wire clamping site which is open on one side, on which site the second winding wire section (3b) can be fixed by clamping the winding wire (3).

5. The winding body (1) according to any one of the preceding claims, **characterized in that** each winding wire holding device (20) forms an L-shaped or U-shaped bracket (30) protruding from a flange region (12) of the winding support (11), on which bracket the respective second wire fixation (22) is formed.

6. The winding body (1) according to claim 5, **characterized in that** the bracket (30) forms at least one respective first web (30a) or second web (30b) running parallel or transversely with respect to the winding wire direction (W) of the winding wire (3), and the second wire fixation (22) is formed on the transversely extending second web (30b).

7. The winding body (1) according to any one of the preceding claims and claim 2, **characterized in that** the second winding pin (22) has an axial direction deviating with respect to that of the first winding pin (21), preferably an axial direction deviating by approximately 90° with respect to the axial direction of the first winding pin (21).

8. The winding body (1) according to any one of the preceding claims, **characterized in that** the winding support (11) of the winding body (1) is wound with the winding wire (3), said winding wire is fastened at least with the first winding wire section (3a) on the first wire fixation (21) and with the second winding wire section (3b) on the second wire fixation (22) of the winding wire holding device (20).

9. The winding body (1) according to any one of the preceding claims, **characterized in that** the wire fixation is formed using a spaced double wire laying or means for double wire laying, which is designed so that an additional wire loop is formed, which, in case of repair, enables a necessary second connection process, soldering process or welding process.

10. A method for fastening a winding wire end or a winding wire section of a winding wire (3) on a winding body (1) according to any one of the preceding claims, with the following steps:
a. fixing a first winding wire section (3a) on a first wire fixation (21) in that at least one wire winding is formed around the first wire fixation (21), and
b. applying an axial tensile force to the winding wire (3) in the winding wire direction (W) of a second wire fixation (22), and
c. fixing a second winding wire section (3b) on a second wire fixation (22), so that the winding wire (3) is stretched between the first and second wire fixations (21, 22) or runs at least in a straight line or in a manner suitable for the wire fixation.

## Revendications

1. Corps de bobinage (1) permettant de recevoir un bobinage d'un fil de bobinage électrique (3) pour former une bobine destinée à une machine électrique dotée d'une zone de bobinage (10) qui est formée par un support de bobinage (11) et au moins un dispositif de retenue de fil de bobinage (20) adjacent à la zone de bobinage (10) et relié au support de bobinage (11), chaque dispositif de retenue de fil de bobinage (20) présentant un premier point de fixation de fil (21) et un deuxième point de fixation de fil (22) espacé par rapport à celui-ci dans un sens de fil de bobinage (W) pour fixer un premier segment de fil de bobinage (3a) au premier point de fixation de fil (21) et guider le fil de bobinage (3) de là jusqu'au deuxième point de fixation de fil (22) et pour le fixer à celui-ci à l'aide d'un deuxième segment de fil de bobinage (3b),
**caractérisé en ce que** le premier point de fixation de fil (21) forme en même temps un moyen de fixation pour le positionnement et/ou la fixation du corps de bobinage (1) à des évidements correspondants d'une carte de circuits imprimés (L),
dans lequel une connexion en ligne droite entre le premier point de fixation de fil (21) et le deuxième point de fixation de fil (22) définit le sens de fil de bobinage (W) du fil de bobinage (3) dans cette zone,
et dans lequel chaque dispositif de retenue de fil de bobinage (20) présente dans la zone entre le premier point de fixation de fil (21) respectivement et le deuxième point de fixation de fil (22) respectivement une ouverture ou un évidement de type fenêtre par laquelle ou lequel passe le fil de bobinage (3) avec un segment de fil entre le premier et le deuxième segment de fil de bobinage (3a, 3b) respectivement de sorte que le segment de fil est fixé au corps de bobinage (1) entre le premier et le deuxième point de fixation de fil (21, 22) et est accessible pour être relié à la carte de circuits imprimés (L).

2. Corps de bobinage (1) selon la revendication 1, **caractérisé en ce que** le premier point de fixation de fil (21) est réalisée sous la forme d'une première borne pour connexion enroulée (21) faisant saillie à partir du corps de bobinage (1) et à laquelle le premier segment de fil de bobinage (3a) peut être fixé en réalisant au moins un enroulement de fil passant autour de la première borne pour connexion enroulée (21).

3. Corps de bobinage (1) selon la revendication 1 ou 2, **caractérisé en ce que** le deuxième point de fixation de fil (22) est réalisé sous la forme d'une deuxième borne pour connexion enroulée à laquelle le deuxième segment de fil de bobinage (3b) peut être fixé en réalisant au moins un enroulement de fil passant autour de la deuxième borne pour connexion enroulée (22).

4. Corps de bobinage (1) selon la revendication 1 ou 2, **caractérisé en ce que** le deuxième point de fixation de fil (22) est réalisé sous la forme d'un point de serrage de fil en forme de V, ouvert d'un côté, auquel le deuxième segment de fil de bobinage (3b) peut être fixé par serrage du fil de bobinage (3).

5. Corps de bobinage (1) selon l'une quelconque des revendications précédentes, **caractérisé en ce que** chaque dispositif de retenue de fil de bobinage (20) réalise une anse (30) en forme de L ou en forme de U, faisant saillie à partir d'une zone de bride (12) du support de bobinage (11), à laquelle est réalisée le deuxième point de fixation de fil (22) respectivement.

6. Corps de bobinage (1) selon la revendication 5, **caractérisé en ce que** l'anse (30) réalise au moins respectivement une première entretoise (30a) ou une deuxième entretoise (30b) s'étendant en parallèle ou transversalement au sens de fil de bobinage (W) du fil de bobinage (3), et le deuxième point de fixation de fil (22) est réalisé à la deuxième entretoise (30b) s'étendant transversalement.

7. Corps de bobinage (1) selon l'une quelconque des revendications précédentes et la revendication 2, **caractérisé en ce que** la deuxième borne pour connexion enroulée (22) présente une direction d'extension axiale différente de la première borne pour connexion enroulée (21), de préférence une direction d'extension axiale différente d'environ 90° par rapport à la direction d'extension axiale de la première borne pour connexion enroulée (21).

8. Corps de bobinage (1) selon l'une quelconque des revendications précédentes, **caractérisé en ce que** le support de bobinage (11) du corps de bobinage (1) est enroulé avec le fil de bobinage (3), et celui-ci est fixé au moins par le premier segment de fil de bobinage (3a) au premier point de fixation de fil (21) et est fixé par le deuxième segment de fil de bobinage (3b) au deuxième point de fixation de fil (22) du dispositif de retenue de fil de bobinage (20).

9. Corps de bobinage (1) selon l'une quelconque des revendications précédentes, **caractérisé en ce que** le point de fixation de fil est réalisé avec une pose à fil double espacée ou avec des moyens pour la pose à fil double qui est réalisée de telle sorte qu'une boucle de fil supplémentaire est formée qui permet une deuxième opération de connexion, une deuxième opération de brasage ou une deuxième opération de soudage nécessaire en cas de réparation.

10. Procédé de fixation d'une extrémité de fil de bobinage ou d'un segment de fil de bobinage d'un fil de bobinage (3) à un corps de bobinage (1) selon l'une quelconque des revendications précédentes, comprenant les étapes suivantes consistant à :
a. fixer un premier segment de fil de bobinage (3a) à un premier point de fixation de fil (21) en formant au moins un enroulement de fil autour du premier point de fixation de fil (21), et
b. appliquer une force de traction axiale au fil de bobinage (3) dans le sens de fil de bobinage (W) jusqu'à un deuxième point de fixation de fil (22), et
c. fixer un deuxième segment de fil de bobinage (3b) à un deuxième point de fixation de fil (22) de telle sorte que le fil de bobinage (3) s'étend de manière tendue ou du moins en ligne droite ou d'une manière appropriée à la fixation de fil entre le premier et le deuxième point de fixation de fil (21, 22).
